# EUROPEAN PATENT APPLICATION

(11) **EP 4 807 497 A1**
(43) Date of publication of application: **16.09.2026**
(21) Application number: 25214413.4
(22) Date of filing: 07.11.2025
(51) Int. Cl.: G06F 1/3287, G06F 1/3215, G06F 1/3228, G06F 1/3231, G06F 1/16, G06F 3/01, G06F 3/0484, G06F 3/0487, G06F 3/16, G06F 9/4401

(54) **METHOD OF WAKING UP APPLICATION, ELECTRONIC DEVICE, AND STORAGE MEDIUM**

(30) Priority: 14.03.2025 CN 202510308349
(71) Applicant: Beijing Zitiao Network Technology Co., Ltd., Beijing 100190 (CN)
(72) Inventor: HAN, Zhimin, Beijing, 100028 (CN); WANG, Han, Beijing, 100028 (CN)
(74) Representative: Isarpatent

(57) **Abstract**

The present disclosure provides a method of waking up an application, an electronic device, and a storage medium. The method includes: obtaining target wake-up information (S201); determining, among a plurality of agent objects, a target agent object corresponding to the target wake-up information (S202); and waking up the target agent object (S203).

## Description

### TECHNICAL FIELD

Embodiments of the present disclosure relate to a method of waking up an application, an electronic device, and a storage medium.

### BACKGROUND

An application installed on an electronic device may be woken up through voice, and the woken application may interact with a user.

At present, the application is woken up directly through a specified wake-up word, to implement interaction with the user by using the woken application. In this manner, only the application with a single function may be woken up, and the application with rich functions cannot be accurately woken up.

### SUMMARY

An embodiment of the present disclosure provides a method of waking up an application. The application includes a plurality of agent objects, and each agent object has corresponding wake-up information. The method includes: obtaining target wake-up information (for example, first wake-up information); determining, among the plurality of agent objects, a target agent object (for example, a first agent object) corresponding to the target wake-up information; and wake-up up the target agent object.

An embodiment of the present disclosure provides a method of waking up an application, which is applied to a wearable device. An application is deployed in a terminal device, and the application includes a plurality of agent objects. The method includes: obtaining target wake-up information (for example, first wake-up information); and sending the target wake-up information to the terminal device, where the target wake-up information is used for instructing the terminal device to determine a target agent object (for example, a first agent object) corresponding to the target wake-up information and wake up the target agent object.

An embodiment of the present disclosure provides a method of waking up an application, which is applied to a wearable device. The application is deployed in a terminal device, and the application includes a plurality of agent objects. The method includes:
obtaining user voice information;
sending the user voice information to the terminal device, to enable the terminal device to wake up a corresponding target agent object (for example, a first agent object) among the plurality of agent objects according to the user voice information.

An embodiment of the present disclosure provides a method of waking up an application, which is applied to a terminal device. The application includes a plurality of agent objects. The method includes:
obtaining user voice information;
determining target wake-up information (for example, first wake-up information) according to the user voice information;
waking up, according to the target wake-up information, a corresponding target agent object (for example, a first agent object) among the plurality of agent objects.

An embodiment of the present disclosure provides an apparatus of waking up an application. The application includes a plurality of agent objects, and each agent object has corresponding wake-up information. The apparatus includes:
an obtaining unit, configured to obtain target wake-up information (for example, first wake-up information);
a determining unit, configured to determine, among the plurality of agent objects, a target agent object (for example, a first agent object information) corresponding to the target wake-up information; and
a wake-up unit, configured to wake up the target agent object.

An embodiment of the present disclosure provides an apparatus of waking up an application, which is applied to a wearable device. The application is deployed in a terminal device, and the application includes a plurality of agent objects. The apparatus includes:
an obtaining unit, configured to obtain target wake-up information (for example, first wake-up information); and
a sending unit, configured to send the target wake-up information to the terminal device, where the target wake-up information is used for instructing the terminal device to determine a target agent object (for example, a first agent object) corresponding to the target wake-up information and wake up the target agent object.

An embodiment of the present disclosure provides an apparatus of waking up an application, which is applied to a wearable device. The application is deployed in a terminal device, and the application includes a plurality of agent objects. The apparatus includes:
an obtaining unit, configured to obtain user voice information; and
a sending unit, configured to send the user voice information to the terminal device, to enable the terminal device to wake up a corresponding target agent object (for example, a first agent object) among the plurality of agent objects according to the user voice information.

An embodiment of the present disclosure provides an apparatus of waking up an application, which is applied to a terminal device. The application includes a plurality of agent objects. The apparatus includes:
an obtaining unit, configured to obtain user voice information;
a determining unit, configured to determine target wake-up information (for example, first wake-up information) according to the user voice information;
a wake-up unit, configured to wake up a corresponding target agent object (for example, a first agent object) among the plurality of agent objects according to the target wake-up information.

An embodiment of the present disclosure provides an electronic device, including: a processor and a memory;
the memory stores computer-executable instructions;
the processor executes the computer-executable instructions stored in the memory, to cause at least one processor to execute the method of waking up an application of various possible applications in the above embodiments.

An embodiment of the present disclosure provides a computer-readable storage medium, where the computer-readable storage medium stores computer-executable instructions, and when a processor executes the computer-executable instructions, the method of waking up an application of various possible applications in the above embodiments is implemented.

An embodiment of the present disclosure provides a computer program product, including a computer program, and when the computer program is executed by a processor, the method of waking an application of various possible applications in the above embodiments is implemented.

### BRIEF DESCRIPTION OF DRAWINGS

In order to more clearly explain the technical solutions in the embodiments of the present disclosure or in the prior art, the following will briefly introduce the drawings that need to be used in the description of the embodiments or the prior art. Obviously, the drawings in the following description are some embodiments of the present disclosure. For those of ordinary skill in the art, other drawings may be obtained based on these drawings without creative efforts.
Fig. 1 is an example diagram of an application scenario of a method of waking an application provided by an embodiment of the present disclosure;
Fig. 2 is a flowchart of a first method of waking up an application provided by an embodiment of the present disclosure;
Fig. 3 is a schematic diagram of a plurality of agent objects provided by an embodiment of the present disclosure;
Fig. 4 is a flowchart of a second method of waking up an application provided by an embodiment of the present disclosure;
Fig. 5 is a flowchart of a third method of waking up an application provided by an embodiment of the present disclosure;
Fig. 6 is a flowchart of a fourth method of waking up an application provided by an embodiment of the present disclosure;
Fig. 7 is a structural block diagram of a first apparatus of waking up an application provided by an embodiment of the present disclosure;
Fig. 8 is a structural block diagram of a second apparatus of waking up an application provided by an embodiment of the present disclosure;
Fig. 9 is a structural block diagram of a third apparatus of waking up an application provided by an embodiment of the present disclosure;
Fig. 10 is a structural block diagram of a fourth apparatus of waking up an application provided by an embodiment of the present disclosure; and
Fig. 11 is a schematic structural diagram of an electronic device provided by an embodiment of the present disclosure.

### DETAILED DESCRIPTION

In order to make objectives, technical solutions and advantages of embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, rather than all of them. All other embodiments obtained by those of ordinary skill in the art without paying creative effort based on the embodiments in the present disclosure belong to the protection scope of the present disclosure.

It may be understood that before using the technical solutions disclosed in the embodiments of the present disclosure, the type, range of use, use scenarios, etc., of personal information involved in the present disclosure should be informed to a target user and the authorization of the target user should be obtained in an appropriate manner according to relevant laws and regulations.

It may be understood that the above process of notifying and acquiring the authorization of the target user is only illustrative, and does not constitute a limitation on the implementation of the present disclosure. Other ways that satisfy relevant laws and regulations may also be applied to the implementation of the present disclosure.

An application with Artificial Intelligence (AI) function may be installed in any electronic device, and then a user may wake up the application through voice, and the woken application may talk to the user. At present, the application has only one wake-up word, and the user may only wake up the application according to the one wake-up word. For example, "Hello XX" is the wake-up word for wake-up up the application. With this wake-up manner, an application with rich functions cannot be accurately woken up.

In order to solve the technical problem, the present disclosure provides a method of waking up an application. Through obtaining target wake-up information, determining, among a plurality of agent objects, a target agent object corresponding to the target wake-up information, and waking up the target agent object, when an application includes the plurality of agent objects, the target agent object corresponding to the target wake-up information may be accurately woken up, and the wake-up efficiency of the application including the plurality of agent objects is further improved. In addition, since the application includes the plurality of agent objects, and each agent object may be woken up by using the corresponding wake-up information, the functions of the application may be richer.

The following will introduce in detail the method of waking up an application provided by the embodiments of the present disclosure with reference to the drawings.

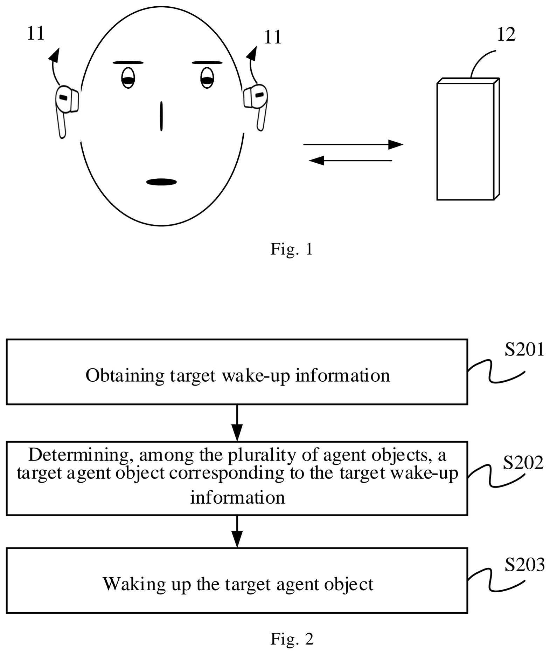

Fig. 1 is an example diagram of an application scenario of a method of waking up an application provided by an embodiment of the present disclosure. As shown in Fig. 1, it includes: a wearable device 11 and a terminal device 12, where the wearable device 11 is communicatively connected to the terminal device 12, the wearable device 11 is, for example, a headset, and the wearable device 11 interacts with a user to receive a wake-up word, and then transmits the wake-up word to the terminal device 12. The application is installed in the terminal device 12, and the terminal device 12 may wake up the application after receiving the wake-up word.

Fig. 1 is only an exemplary application scenario, and in addition, the application scenario of the present disclosure may also be that an application is installed in the wearable device. In this scenario, the wearable device interacts with the user to receive a wake-up word, to wake up the application on the wearable device. Further, the application scenario of the present disclosure may also be that an application is installed in the terminal device. In this scenario, the terminal device interacts with the user to receive a wake-up word, to wake up the application on the terminal device. The present disclosure may be applied to any scenario where an application is woken up, which is not limited.

Fig. 2 is a flowchart of a method of waking up an application provided by an embodiment of the present disclosure. The method of waking up an application is applied to a wearable device, the application is deployed in the wearable device, or the method of waking up an application is applied to a terminal device, and the application is deployed in the terminal device. The method may include the following steps.

S201, obtaining target wake-up information. For example, the target wake-up information is first wake-up information.

In the embodiments of the present disclosure, an application includes a plurality of agent objects, and each agent object has corresponding wake-up information. It may be understood that the plurality of agent objects include at least two agent objects.

In an embodiment, the plurality of agent objects are preset and/or the wake-up information corresponding to the agent objects is preset. It may be understood that the agent objects are preset by a user, and the user may preset a plurality of agent objects in the application according to his/her own preferences, and each agent object corresponds to different attribute. In addition, the wake-up word of the agent object may also be preset by the user in the app, and the user may wake up the corresponding agent object according to the wake-up word.

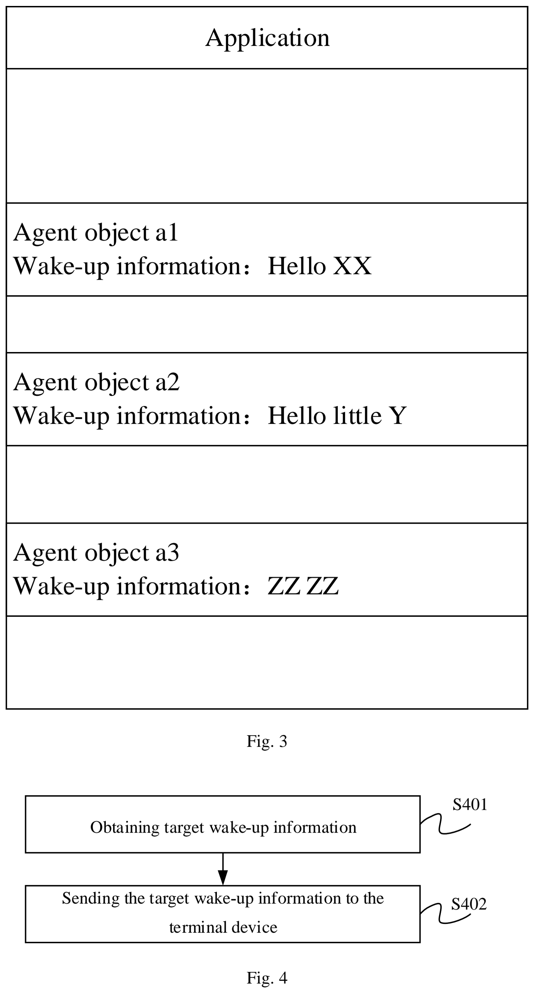

In an embodiment, different agent objects correspond to different attributes, and the attributes of the agent objects are predefined. For example, referring to Fig. 3, the attribute of agent object a1 represents that the agent object a1 is used for English learning, the attribute of agent object a2 represents that the agent object a2 is used for chatting, and the attribute of agent object a3 represents that the agent object a3 is used for knowledge question answering. In the present disclosure, the attributes of the agent objects may be predefined by the user, and different agent objects may communicate different contents with the user according to their own attributes.

In an embodiment, the target wake-up information includes a target wake-up word (for example, a first wake-up word), and obtaining the target wake-up information includes: obtaining user voice information; and determining the target wake-up word in the user voice information. For example, referring to Fig. 3, the application includes three agent objects, which are agent object a1, agent object a2 and agent object a3, respectively, where the wake-up information corresponding to the agent object a1 is "Hello XX", the wake-up information corresponding to the agent object a2 is "Hello little Y", and the wake-up information corresponding to the agent object a3 is "ZZ ZZ". If the user voice information is "ZZ, ZZ", the target wake-up word is "ZZ, ZZ". If the user voice information is "ZZ, ZZ, what's the weather today", the target wake-up word is also "ZZ, ZZ".

In an embodiment, the target wake-up information includes a target wake-up gesture (for example, a first wake-up gesture), and obtaining the target wake-up information includes: obtaining a target image (for example, a first image), where the target image is acquired for a user gesture; and recognizing gesture information in the target image as the target wake-up gesture.

In the present disclosure, the gesture information corresponding to each agent object may also be predefined. For example, the gesture information corresponding to agent object a1 is "waving", the gesture information corresponding to agent object a2 is "fist clenching", and the gesture information corresponding to agent object a3 is "thumb up".

It may be understood that if the application is installed on a wearable device, the wearable device is provided with a camera, the camera may acquire a target image, and the wearable device may recognize the gesture information in the target image as the target wake-up gesture. If the application is installed on a terminal device, the wearable device may transmit the acquired target image to the terminal device, or the camera provided on the terminal device may acquire the target image, and then the recognition is performed.

In the embodiments of the present disclosure, wake-up information corresponding to the agent object may also be other preset information, which is not limited here.

In summary, in the present disclosure, a plurality of agent objects with different attributes may be preset in the application to improve the functional richness of the application. In addition, in the present disclosure, different wake-up information may be predefined for different agent objects, which is convenient for the user to accurately wake up the agent object that is needed.

S202, determining, among the plurality of agent objects, a target agent object corresponding to the target wake-up information. For example, the target agent object is a first agent object.

In the embodiments of the present disclosure, different agent objects correspond to different wake-up information, and accordingly the target agent object corresponding to the target wake-up information may be determined according to the target wake-up information.

For example, if the target wake-up information is "ZZ, ZZ", the target agent object is determined to be "agent object a3". For another example, if the target wake-up information is the gesture information "fist clenching", the target agent object is determined to be "agent object a2".

S203, waking up the target agent object.

In the embodiments of the present disclosure, the woken target agent object may interact with the user.

In an embodiment, after waking up the target agent object, the method further includes: determining first opening information according to the target agent object; and controlling the target agent object to broadcast the first opening information.

It may be understood that the target agent object determines the first opening information after being woken up. In a scenario, if the application is installed on the wearable device side, after the first opening information is determined, the wearable device broadcasts the first opening information. In another scenario, if the application is installed on the terminal device side, where the target wake-up information is obtained based on the interaction between the wearable device and the terminal device, after the first opening information is determined, the first opening information is sent to the wearable device, and the first opening information is broadcast on the wearable device side. In another scenario, if the application is installed on the terminal device side, and the target wake-up information is obtained through the interaction between the terminal device and the user, the terminal device broadcasts the first opening information after the first opening information is determined.

It may be understood that after the target agent object is woken up, the target agent object may generate the first opening information according to a time interval and/or historical interaction information, or the first opening information is preset by the user.

In an embodiment, the method further includes: obtaining a last wake-up time of the target agent object; and determining a time interval from the last wake-up time to a current wake-up time, where the determining first opening information according to the target agent object includes: controlling the target agent object to generate the first opening information according to the time interval.

The current wake-up time is the time at which the target agent object is woken up this time. In the present disclosure, different first opening information may be generated according to the length of the time interval. If the time interval is greater than or equal to a time interval threshold (for example, one week), relatively simple first opening information is output. If the time interval is less than the time interval threshold, the output first opening information may be for a certain topic. For example, if the target agent object is the agent object a2 (used for chatting) in Fig. 3, the simple first opening information is, for example, "Long time no see, how have you been", and the first opening information for a certain topic is, for example, "Good afternoon, dear master, I heard a nice song recently, do you want to listen to it".

In an embodiment, the method further includes: obtaining historical interaction information between the target agent object and a user, where the determining first opening information according to the target agent object includes: controlling the target agent object to generate the first opening information according to the historical interaction information.

The historical interaction information may be interaction information between the target agent object and the user over a past period of time. The target agent object may process the historical interaction information to obtain the first opening information. It may be understood that the content of the first opening information is related to the historical interaction information. For example, the target agent object is agent object a2 (used for chatting) in Fig. 3, and if the content of the historical interaction information is that the user communicates with the target agent object about mountain climbing, the first opening information may be "Hello, did you go mountain climbing as you said last time".

In the present disclosure, the first opening information generated by the target agent object has at least one of the following characteristics: richness in variety, consistency with the user's interests, and naturalness. It may be understood that the richness in variety may mean that the target agent object may generate different first opening information every time. That the first opening information is consistency with the user's interests means that the first opening information is related to the user's interests. The naturalness means that the first opening information will not make the user feel embarrassed and is suitable in length for the user.

In an embodiment, the first opening information is preset for the target agent object. Corresponding first opening information may be preset for each agent object, and after the target agent object is woken up, the first opening information corresponding to the target agent object is obtained, and the first opening information is played. The first opening information may be preset by the user. For example, if the target agent object is agent object a1 (used for English learning) in Fig. 3, the corresponding first opening information is "Master, you are so hardworking, and you are here to learn English again". If the target agent object is agent object a2 (used for chatting) in Fig. 3, the corresponding first opening information is "Little master, share your mood with me". If the target agent object is the agent object a3 (used for knowledge question answering) in Fig. 3, the corresponding first opening information is "Tell me your question, and I will answer it for you". In the embodiments of the present disclosure, the first opening information is set by the user according to their own preferences, and the specific content is not limited.

Further, the present disclosure further includes: obtaining a first preset duration corresponding to the target agent object; in response to not receiving user voice information within the first preset duration after the target agent object broadcasts the first opening information, determining second opening information according to the target agent object, and broadcasting the second opening information.

The first preset duration may be set by the user, for example, 5 seconds. Then, if the user voice information is received within 5 seconds after the target agent object broadcasts the first opening information, the target agent object may be controlled to reply to the voice information. If the user voice information is not received within 5 seconds after the target agent object broadcasts the first opening information, the target agent object determines the second opening information to proactively ask the user.

In addition, in a scenario, if the application is installed on the terminal device and the wearable device interacts with the terminal device, the terminal device determines the first opening information and sends the first opening information to the wearable device for broadcasting. If the target agent object does not receive the user voice information sent from the wearable device within the first preset duration after sending the first opening information, the second opening information is determined according to the target agent object, and the second opening information is sent to the wearable device for broadcasting.

It may be understood that after the first opening information is broadcast, if the user does not respond, the second opening information may be continuously broadcasted, and the second opening information may also be generated according to the time interval and/or the historical interaction information, or the second opening information is preset by the user.

In an embodiment, the method further includes: obtaining the last wake-up time of the target agent object; and determining the time interval from the last wake-up time to the current wake-up time, where the determining second opening information according to the target agent object includes: controlling the target agent object to generate the second opening information according to the time interval.

The content of the second opening information is different from the content of the first opening information. If the time interval is greater than or equal to a time interval threshold (for example, one week), relatively simple second opening information is output. If the time interval is less than the time interval threshold, the output second opening information may be for a certain topic. For example, if the target agent object is agent object a2 (used for chatting) in Fig. 3, the relatively simple second opening information is, for example, "Master, are you still there", and the second opening information for a certain topic is, for example, "I guess you want to listen to this song, do you want me to play it for you".

In an embodiment, the method further includes: obtaining historical interaction information between the target agent object and a user, where determining the second opening information according to the target agent object includes: controlling the target agent object to generate the second opening information according to the historical interaction information.

For example, the target agent object is agent object a2 (used for chatting) in Fig. 3, and if the content of the historical interaction information is that the user communicates with the target agent object about mountain climbing, the second opening information may be "Recently, the peach blossoms on a mountain are in bloom, do you want to go".

In an embodiment, the second opening information is preset for the target agent object. Corresponding second opening information may be preset for each agent object. For example, if the target agent object is agent object a1 (used for English learning) in Fig. 3, the corresponding second opening information is "Master, are you too tired today? Learning English requires persistence". If the target agent object is agent object a2 (used for chatting) in Fig. 3, the corresponding second opening information is "Little master, I guess you are not in a good mood, are you". If the target agent object is agent object a3 (used for knowledge question answering) in Fig. 3, the corresponding second opening information is "Master, it seems that you have no question to ask me today". In the embodiments of the present disclosure, the second opening information is set by the user according to their own preferences, and the specific content is not limited.

In an embodiment, the method further includes: obtaining a second preset duration corresponding to the target agent object; exiting, in response to not receiving user voice information within the second preset duration after the target agent object broadcasts the first opening information or within the second preset duration after the target agent object broadcasts the second opening information, the target agent object, where the target agent object that is exited is used for interaction after being re-woken up.

In a case, the user voice information is not received within the second preset duration after the target agent object broadcasts the first opening information, and the target agent object is exited. In this case, the second opening information is not determined and broadcast. In another case, the user voice information is not received within the second preset duration after the second opening information is broadcast, and the target agent object is exited. In another case, in the process of interaction between the target agent object and the user, for example, after the target agent object plays the first opening information or the second opening information, the user voice information is received, communication with the user may be conducted, and if the target agent object does not receive the user voice information within the second preset duration after replying to the user, the target agent object is also exited.

In an embodiment, after waking up the target agent object, the method further includes: controlling the target agent object to generate reply information for the user voice information.

In an embodiment, the user voice information includes a target wake-up word and other content, and the user voice information may be replied after the target agent object is woken up. For example, the user voice information is "ZZ, ZZ, what's the weather today", where the target wake-up word is "ZZ, ZZ", agent object a3 is then woken up, and the agent object a3 is controlled to reply "Today's temperature ranges from 20°C to 28°C, sunny".

In an embodiment, the waking up the target agent object includes: determining whether the target agent object is set to be unable to be woken up; and waking up the target agent object in response to the target agent object not being set to be unable to be woken up. In the present disclosure, the user may set whether each agent object may be woken up. An agent object that is set to be unwakeable cannot be woken up, and an agent object that is not set to be unwakeable may be woken up according to the corresponding wake-up information.

For example, if the wake-up information is used for wake-up up agent object a3, but agent object a3 is set to be "unwakeable", the agent object a3 is not woken up at this time. If the wake-up information is used for waking up agent object a2, and agent object a2 is not set to be "unwakeable", agent object a2 may be woken up.

In the embodiments of the present disclosure, a Large Language Model (LLM) is deployed in the agent object, and the LLM may be used to process the user voice information, and then a corresponding reply is made.

In summary, different agent objects included in the application may satisfy the user's different needs. In addition, the user may flexibly set the agent objects, the attributes of the agent objects and the opening information of the agent objects, which may further improve the user experience. Moreover, if the application includes a plurality of agent objects, the target agent corresponding to the target wake-up information may be accurately woken up, and the wake-up efficiency of the application including the plurality of agent objects is further improved.

Fig. 4 is a flowchart of another method of waking up an application provided by an embodiment of the present disclosure. The method of waking up an application is applied to a wearable device, the application is deployed in a terminal device, and the application includes a plurality of agent objects. The method may include the following steps.

S401, obtaining target wake-up information. For example, the target wake-up information is first wake-up information.

In the present disclosure, the wearable device includes one of: a head-mounted display, a headphone or glasses. The head-mounted display is, for example, Virtual Reality (VR) glasses, Extended Reality (XR) glasses, Mixed Reality (MR) glasses, Augmented Reality (AR) glasses, etc.

In an embodiment, the target wake-up information includes a target wake-up word, and obtaining the target wake-up information includes: obtaining user voice information; and determining the target wake-up information based on the user voice information. Specifically, the target wake-up word may be determined based on the user voice information.

In the present disclosure, the wearable device includes a microphone, which may acquire the user voice information.

In an embodiment, the target wake-up information includes a target wake-up gesture, and obtaining the target wake-up information includes: obtaining a target image, where the target image is acquired for a user gesture; and recognizing gesture information in the target image as the target wake-up gesture.

In the present disclosure, the wearable device includes a camera, which may acquire a target image.

In an embodiment, the target wake-up information includes target identification information of a target agent object. In the present disclosure, obtaining the target wake-up information includes: obtaining user voice information; determining a target wake-up word based on the user voice information, and then determining the target identification information of the corresponding target agent object according to the target wake-up word. Or, obtaining the target wake-up information includes: obtaining a target image, where the target image is acquired for a user gesture; recognizing gesture information in the target image as a target wake-up gesture, and then determining the target identification information of the corresponding target agent object according to the target wake-up gesture.

For example, if the target agent object is agent object a1, the target identification information is a1.

In the embodiments of the present disclosure, for relevant content, reference may be made to the above embodiments, which will not be repeated here.

S402, sending the target wake-up information to the terminal device.

The target wake-up information is used for instructing the terminal device to determine a target agent object corresponding to the target wake-up information and wake up the target agent object. For example, the target agent object is a first agent object.

In an embodiment, if the target wake-up information is a target wake-up word or a target wake-up gesture, the corresponding target agent object may be determined according to the correspondence between wake-up words and agent objects or the correspondence between wake-up gestures and agent objects, and then the target agent object is woken up.

In an embodiment, if the target wake-up information is the target identification information, the corresponding target agent object may be directly woken up according to the target identification information. For example, if the target identification information is a1, the agent object a1 is woken up.

It may be understood that after receiving the target wake-up information, the terminal device may perform relevant steps in S201 to S203. Details are not repeated here.

In the present embodiment, an application is deployed in the terminal device, and interacts with a user through the wearable device. The wearable device processes the acquired user voice information or target image to obtain the target wake-up information, and then sends the target wake-up information to the terminal device, to wake up the target agent object on the terminal device side, thereby improving the efficiency of waking up the target agent object when the user wears the wearable device.

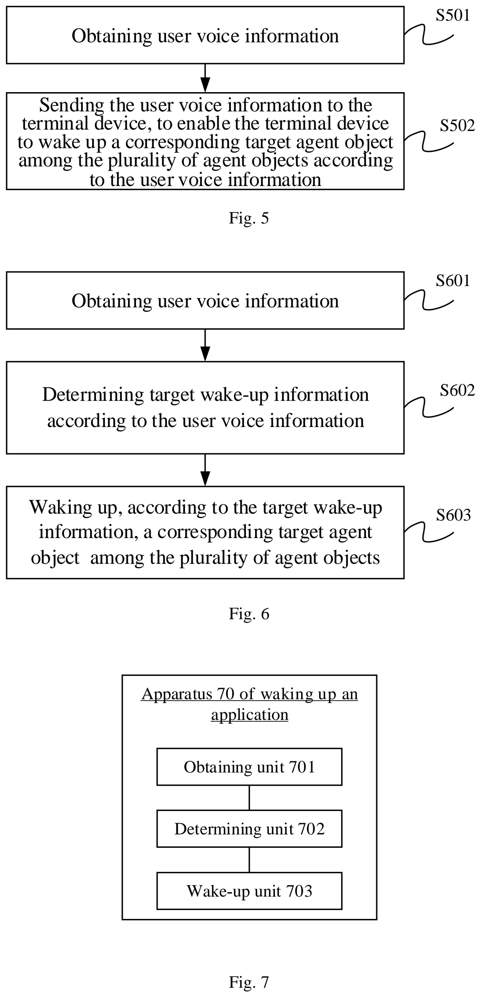

Fig. 5 is a flowchart of a method of waking up an application provided by an embodiment of the present disclosure. The method of waking up an application is applied to a wearable device, the application is deployed in a terminal device, and the application includes a plurality of agent objects. The method may include the following steps.

S501, obtaining user voice information.

In the embodiments of the present disclosure, the wearable device uses a microphone to acquire the user voice information.

S502, sending the user voice information to the terminal device, to enable the terminal device to wake up a corresponding target agent object among the plurality of agent objects according to the user voice information. For example, the target agent object is a first agent object.

The wearable device sends the user voice information to the terminal device, and the terminal device analyzes the user voice information to obtain a target wake-up word, and then the target agent object is woken up according to the target wake-up word. For example, the target wake-up word is a first wake-up word.

In an embodiment, the wearable device may also acquire a target image and then send the target image to the terminal device, and the terminal device recognizes gesture information in the target image as a target wake-up gesture, then determines the corresponding target agent object according to the target wake-up gesture, and then the target agent object is woken up.

In the present disclosure, the wearable device is configured to acquire the target image or the user voice information, and directly send the acquired information to the terminal device for processing. For the process of processing the target image or the user voice information by the terminal device, reference may be made to relevant content of the above embodiments, which will not be repeated here.

In summary, in the present embodiment, an application is deployed in the terminal device, and interacts with a user through the wearable device. The wearable device sends the acquired user voice information or target image to the terminal device, and the user voice information or the target image is processed on the terminal device side, to wake up the target agent object on the terminal device side, thereby improving the efficiency of waking up the target agent object when the user wears the wearable device.

Fig. 6 is a flowchart of a method of waking up an application provided by an embodiment of the present disclosure, which is applied to a terminal device. The application includes a plurality of agent objects. The method may include the following steps.

S601, obtaining user voice information.

In the embodiments of the present disclosure, in one case, the terminal device includes a microphone, and obtaining the user voice information includes: the terminal device acquires the user voice information through the microphone. In another case, obtaining the user voice information includes: the terminal device receiving the user voice information sent by a wearable device.

S602, determining target wake-up information according to the user voice information. For example, the target wake-up information is first wake-up information.

S603, waking up, according to the target wake-up information, a corresponding target agent object among the plurality of agent objects. For example, a target agent object is a first agent object.

For the specific implementation process of this step, reference may be made to the above embodiments, which will not be repeated here.

In the embodiments of the present disclosure, an application is deployed in the terminal device, and interacts with a user through a wearable device. The wearable device acquires the user voice information and then sends the user voice information to the terminal device, to implement the waking up of the target agent object on the terminal device side, thereby improving the efficiency of waking up the target agent object when the user wears the wearable device. In addition, the terminal device may also acquire the user voice information by itself, to implement the waking up of the target agent object on the terminal device side, thereby improving the accuracy of waking up the target agent object.

Fig. 7 is a schematic structural diagram of an apparatus 70 of waking up an application provided by an embodiment of the present disclosure. The application includes a plurality of agent objects, each agent object has corresponding wake-up information, and the apparatus of waking up an application may include the following units:
an obtaining unit 701, configured to obtain target wake-up information; for example, the target wake-up information is first wake-up information.
a determining unit 702, configured to determine, among the plurality of agent objects, a target agent object corresponding to the target wake-up information, for example, the target agent object is a first agent object; and
a wake-up unit 703, configured to wake up the target agent object.

In an optional embodiment, the target wake-up information includes a target wake-up word, and the obtaining unit 701 is further configured to:
obtain user voice information; and
determine the target wake-up word in the user voice information.

In an optional embodiment, the target wake-up information includes a target wake-up gesture, and the obtaining unit 701 is further configured to:
obtain a target image, where the target image is acquired for a user gesture; and
recognize gesture information in the target image as the target wake-up gesture.

In an optional embodiment, the determining unit 702 is further configured to: after waking up the target agent object, determine first opening information according to the target agent object.

The apparatus further includes: a broadcasting unit (not shown), configured to control the target agent object to broadcast the first opening information.

In an optional embodiment,
the obtaining unit 701 is further configured to obtain a first preset duration corresponding to the target agent object; and
the determining unit 702 is further configured to: in response to not receiving user voice information within a first preset duration after the target agent object broadcasts the first opening information, determine second opening information according to the target agent object and broadcast the second opening information.

In an optional embodiment,
the obtaining unit 701 is further configured to obtain the last wake-up time of the target agent object; and
the determining unit 702 is further configured to determine a time interval from the last wake-up time to the current wake-up time,
where in determining the first opening information according to the target agent object, the determining unit 702 is further configured to control the target agent object to generate the first opening information according to the time interval, and/or in determining the second opening information according to the target agent object, the determining unit 702 is further configured to: control the target agent object to generate the second opening information according to the time interval.

In an optional embodiment,
the obtaining unit 701 obtains historical interaction information between the target agent object and a user,
where in determining the first opening information according to the target agent object, the determining unit 702 is further configured to control the target agent object to generate the first opening information according to the historical interaction information, and/or in determining the second opening information according to the target agent object, the determining unit 702 is further configured to control the target agent object to generate the second opening information according to the historical interaction information.

In an optional embodiment, the first opening information and/or the second opening information are preset for the target agent object.

In an optional embodiment,
the obtaining unit 701 is further configured to obtain a second preset duration corresponding to the target agent object; and
the apparatus further includes: an exiting unit (not shown), configured to: exit, in response to not receiving the user voice information within the second preset duration after the target agent object broadcasts the first opening information or within the second preset duration after the target agent object broadcasts the second opening information, the target agent object, where the target agent object that is exited is used for interaction after being re-woken up.

In an optional embodiment, the apparatus further includes a generating unit (not shown), configured to: after waking up the target agent object, control the target agent object to generate reply information for the user voice information.

In an optional embodiment, the wake-up unit 703 is further configured to determine whether the target agent object is set to be unable to be woken up; and wake up the target agent object in response to the target agent object being not set to be unable to be woken up.

In an optional embodiment, the plurality of agent objects are preset and/or wake-up information corresponding to the agent object is preset.

In an optional embodiment, different agent objects correspond to different attributes, and attributes of the agent objects are predefined.

In an optional embodiment, the application is deployed in the wearable device or the terminal device.

For the specific implementation process of the apparatus of waking up an application provided by the embodiments of the present disclosure, reference may be made to the embodiments of the method of waking up an application, which will not be repeated here.

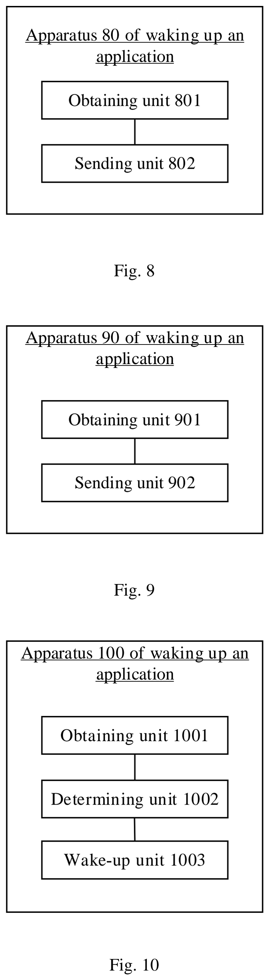

Fig. 8 is a schematic structural diagram of another apparatus 80 of waking up an application provided by an embodiment of the present disclosure, which is applied to a wearable device. The application is deployed in a terminal device, and the application includes a plurality of agent objects. The apparatus 80 of waking up an application may include the following units:
an obtaining unit 801, configured to obtain target wake-up information, the target wake-up information is first wake-up information; and
a sending unit 802, configured to send the target wake-up information to the terminal device, where the target wake-up information is used for instructing the terminal device to determine a target agent object corresponding to the target wake-up information and wake up the target agent object. For example, the target agent object is a first agent object.

In an optional embodiment, the obtaining unit 801 is further configured to obtain user voice information; and determine the target wake-up information based on the user voice information.

In an optional embodiment, the target wake-up information includes target identification information of the target agent object.

For the specific implementation process of the apparatus of waking up an application provided by the embodiments of the present disclosure, reference may be made to the embodiments of the method of waking up an application, which will not be repeated here.

Fig. 9 is a schematic structural diagram of another apparatus 90 of waking up an application provided by an embodiment of the present disclosure, which is applied to a wearable device. The application is deployed in a terminal device, and the application includes a plurality of agent objects. The apparatus 90 of waking up an application may include the following units:
an obtaining unit 901, configured to obtain user voice information; and
a sending unit 902, configured to send the user voice information to the terminal device, to enable the terminal device to wake up a corresponding target agent object among the plurality of agent objects according to the user voice information. For example, the target agent object is a first agent object.

For the specific implementation process of the apparatus of waking up an application provided by the embodiments of the present disclosure, reference may be made to the embodiments of the method of waking up an application, which will not be repeated here.

Fig. 10 is a schematic structural diagram of another apparatus 100 of waking up an application provided by an embodiment of the present disclosure, which is applied to a terminal device. The application includes a plurality of agent objects. The apparatus 100 of waking up an application may include the following units:
an obtaining unit 1001, configured to obtain user voice information;
a determining unit 1002, configured to determine target wake-up information according to the user voice information, for example, the target wake-up information is first wake-up information; and
a wake-up unit 1003, configured to wake up a corresponding target agent object among the plurality of agent objects according to the target wake-up information, for example, the target agent object is a first agent object.

For the specific implementation process of the apparatus of waking up an application provided by the embodiments of the present disclosure, reference may be made to the embodiments of the method of waking up an application, which will not be repeated here.

In order to achieve the above embodiments, an embodiment of the present disclosure further provides a computer-readable storage medium, where the computer-readable storage medium stores computer-executable instructions, and when a processor executes the computer-executable instructions, the method of waking up an application according to any one of the above embodiments is implemented.

In order to achieve the above embodiments, an embodiment of the present disclosure further provides a computer program product, including a computer program, and when the computer program is executed by a processor, the method of waking up an application according to any one of the above embodiments is implemented.

In order to achieve the above embodiments, an embodiment of the present disclosure further provides an electronic device, including a processor and a memory;
the memory stores computer-executable instructions;
the processor executes the computer-executable instructions stored in the memory, cause the processor to execute the method of waking up an application according to any one of the above embodiments.

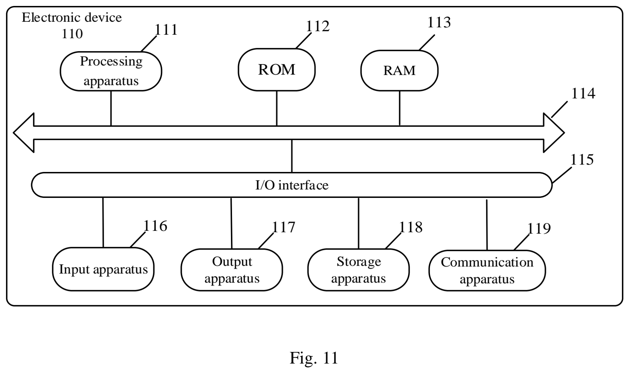

Fig. 11 is a schematic structural diagram of an electronic device provided by an embodiment of the present disclosure, and the electronic device 110 may be a terminal device or a server. The terminal device may include, but is not limited to, mobile terminals such as a mobile phone, a notebook computer, a digital broadcast receiver, a personal digital assistant (PDA), a portable android device (PAD), a portable media player (PMP), a vehicle-mounted terminal (such as a vehicle-mounted navigation terminal), etc., and fixed terminals such as a digital TV, a desktop computer, etc. The electronic device shown in Fig. 11 is only an example, and should not impose any limitation on the functions and the range of use of the embodiments of the present disclosure.

As shown in Fig. 11, the electronic device 110 may include a processing apparatus (such as a central processing unit, a graphics processor and the like) 111, which may perform various appropriate actions and processing according to a program stored in a read-only memory (ROM) 112 or a program loaded from a storage apparatus 118 into a random access memory (RAM) 113. The RAM 113 further stores various programs and data required for operations of the electronic device 110. The processing apparatus 111, the ROM 112 and the RAM 113 are connected to each other through a bus 114. An input/output (I/O) interface 115 is also connected to the bus 114.

Usually, the following apparatuses may be connected to the I/O interface 115: an input apparatus 116 including, for example, a touch screen, a touchpad, a keyboard, a mouse, a camera, a microphone, an accelerometer, a gyroscope and the like; an output apparatus 117 including, for example, a liquid crystal display (LCD), a speaker, a vibrator and the like; the storage apparatus 118 including, for example, a magnetic tape, a hard disk and the like; and a communication apparatus 119. The communication apparatus 119 may allow the electronic device 110 to perform wireless or wired communication with other devices to exchange data. Although Fig. 11 shows the electronic device 110 with various apparatuses, it should be understood that it is not required to implement or have all of the shown apparatuses. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program contains program codes for executing the method shown in the flowchart. In such an embodiment, the computer program may be downloaded and installed from a network through the communication apparatus 119, or installed from the storage apparatus 118, or installed from the ROM 112. When the computer program is executed by the processing apparatus 111, the above-mentioned functions defined in the method of the embodiments of the present disclosure are executed.

It should be noted that the above-mentioned computer-readable medium in the present disclosure may be a computer-readable signal medium, a computer-readable storage medium, or any combination of the two. The computer-readable storage medium may be, for example, but not limited to, an electronic, magnetic, optical, electromagnetic, infrared, or semiconductor system, apparatus or device, or any combination of the above. More specific examples of the computer-readable storage medium may include, but are not limited to: an electrically connected portable computer magnetic disk having one or more wires, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, a computer-readable storage medium may be any tangible medium that contains or stores a program, and the program may be used by or in combination with an instruction execution system, apparatus or device. In the present disclosure, a computer-readable signal medium may include a data signal propagated in a baseband or as part of a carrier wave, and computer-readable program codes are carried therein. This propagated data signal may be in various forms, including but not limited to an electromagnetic signal, an optical signal, or any suitable combination of the above. The computer-readable signal medium may also be any computer-readable medium other than the computer-readable storage medium, and the computer-readable signal medium may send, propagate or transmit the program used by or in combination with the instruction execution system, apparatus or device. The program codes contained on the computer-readable medium may be sent by any suitable medium, including but not limited to: a wire, an optical cable, RF (radio frequency), etc., or any suitable combination of the above.

The above computer-readable medium may be contained in the above electronic device, or may exist alone without being assembled into the electronic device.

The above computer-readable medium carries one or more programs, and when the one or more programs are executed by the electronic device, the electronic device is caused to execute the method shown in the above embodiments.

The computer program codes used to execute the operations of the present disclosure may be written in one or more programming languages or a combination thereof. The above programming languages include object-oriented programming languages such as Java, Smalltalk, C++, and conventional procedural programming languages such as "C" language or similar programming languages. The program codes may be completely executed on a target user computer, partially executed on a target user computer, executed as an independent software package, partially executed on a target user computer and partially executed on a remote computer, or completely executed on a remote computer or server. In the case of involving a remote computer, the remote computer may be connected to a target user computer through any kind of network, including a local area network (LAN) or a wide area network (WAN), or may be connected to an external computer (for example, connected by using Internet provided by an Internet service provider).

The flowcharts and block diagrams in the drawings illustrate the possibly implemented architectures, functions and operations of the systems, methods and computer program products according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a system of dedicated control hardware that executes specified functions or operations, or may be implemented by a combination of dedicated hardware and computer instructions.

The involved units described in the embodiments of the present disclosure may be implemented by software or hardware. The name of a unit does not constitute a limitation on the unit itself under certain circumstances. For example, a first obtaining unit may also be described as "a unit for obtaining at least two internet protocol addresses".

The functions described above herein may be at least partially performed by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logical device (CPLD) and the like.

In the context of the present disclosure, a machine-readable medium may be a tangible medium that may contain or store programs to be used by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium will include an electrical connection controlling one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, a method of waking up an application is provided, the application includes a plurality of agent objects, each agent object has corresponding wake-up information, and the method includes:
obtaining target wake-up information;
determining, among the plurality of agent objects, a target agent object corresponding to the target wake-up information; and
waking up the target agent object.

According to one or more embodiments of the present disclosure, the target wake-up information includes a target wake-up word, and the obtaining target wake-up information includes:
obtaining user voice information; and
determining the target wake-up word in the user voice information.

According to one or more embodiments of the present disclosure, the target wake-up information includes a target wake-up gesture, and the obtaining target wake-up information includes:
obtaining a target image, where the target image is acquired for a user gesture; and
recognizing gesture information in the target image as the target wake-up gesture.

According to one or more embodiments of the present disclosure, after waking up the target agent object, the method further includes:
determining first opening information according to the target agent object; and
controlling the target agent object to broadcast the first opening information.

According to one or more embodiments of the present disclosure, the method further includes:
obtaining a first preset duration corresponding to the target agent object; and
in response to not receiving user voice information within the first preset duration after the target agent object broadcasts the first opening information, determining second opening information according to the target agent object and broadcasting the second opening information.

According to one or more embodiments of the present disclosure, the method further includes:
obtaining a last wake-up time of the target agent object; and
determining a time interval from the last wake-up time to a current wake-up time,
where the determining first opening information according to the target agent object includes: controlling the target agent object to generate the first opening information according to the time interval, and/or the determining second opening information according to the target agent object includes: controlling the target agent object to generate the second opening information according to the time interval.

According to one or more embodiments of the present disclosure, the method further includes:
obtaining historical interaction information between the target agent object and a user,
where the determining first opening information according to the target agent object includes: controlling the target agent object to generate the first opening information according to the historical interaction information, and/or the determining second opening information according to the target agent object includes: controlling the target agent object to generate the second opening information according to the historical interaction information.

According to one or more embodiments of the present disclosure, the first opening information and/or the second opening information are preset for the target agent object.

According to one or more embodiments of the present disclosure, the method further includes:
obtaining a second preset duration corresponding to the target agent object; and
in response to not receiving the user voice information within the second preset duration after the target agent object broadcasts the first opening information or within the second preset duration after the target agent object broadcasts the second opening information, exiting the target agent object, where the target agent object that is exited is used for interaction after being re-woken up.

According to one or more embodiments of the present disclosure, after waking up the target agent object, the method further includes:
controlling the target agent object to generate reply information for the user voice information.

According to one or more embodiments of the present disclosure, the waking up the target agent object includes:
determining whether the target agent object is set to be unable to be woken up; and
waking up the target agent object in response to the target agent object being not set to be unable to be woken up.

According to one or more embodiments of the present disclosure, the plurality of agent objects are preset and/or the wake-up information corresponding to the agent object is preset.

According to one or more embodiments of the present disclosure, different agent objects correspond to different attributes, and attributes of the agent objects are predefined.

According to one or more embodiments of the present disclosure, the application is deployed in the wearable device or the terminal device.

According to one or more embodiments of the present disclosure, a method of waking up an application is provided, which is applied to a wearable device. The application is deployed in a terminal device, and the application includes a plurality of agent objects. The method includes:
obtaining target wake-up information; and
sending the target wake-up information to the terminal device, where the target wake-up information is used for instructing the terminal device to determine a target agent object corresponding to the target wake-up information and wake up the target agent object.

According to one or more embodiments of the present disclosure, the obtaining target wake-up information includes:
obtaining user voice information; and
determining the target wake-up information based on the user voice information.

According to one or more embodiments of the present disclosure, the target wake-up information includes target identification information of the target agent object.

According to one or more embodiments of the present disclosure, a method of waking up an application is provided, which is applied to a wearable device. The application is deployed in a terminal device, and the application includes a plurality of agent objects. The method includes:
obtaining user voice information; and
sending the user voice information to the terminal device, to enable the terminal device to wake up a corresponding target agent object among the plurality of agent objects according to the user voice information.

According to one or more embodiments of the present disclosure, a method of waking up an application is provided, which is applied to a terminal device. The application includes a plurality of agent objects. The method includes:
obtaining user voice information;
determining target wake-up information according to the user voice information; and
waking up, according to the target wake-up information, a corresponding target agent object among the plurality of agent objects.

According to one or more embodiments of the present disclosure, an apparatus of waking up an application is provided. The application includes a plurality of agent objects, and each agent object has corresponding wake-up information. The apparatus includes:
an obtaining unit, configured to obtain target wake-up information;
a determining unit, configured to determine, among the plurality of agent objects, a target agent object corresponding to the target wake-up information; and
a wake-up unit, configured to wake up the target agent object.

According to one or more embodiments of the present disclosure, an apparatus of waking up an application is provided, which is applied to a wearable device. The application is deployed in a terminal device, and the application includes a plurality of agent objects. The apparatus includes:
an obtaining unit, configured to obtain target wake-up information; and
a sending unit, configured to send the target wake-up information to the terminal device, where the target wake-up information is used for instructing the terminal device to determine a target agent object corresponding to the target wake-up information and wake up the target agent object.

According to one or more embodiments of the present disclosure, an apparatus of waking up an application is provided, which is applied to a wearable device. The application is deployed in a terminal device, and the application includes a plurality of agent objects. The apparatus includes:
an obtaining unit, configured to obtain user voice information; and
a sending unit, configured to send the user voice information to the terminal device, to enable the terminal device to wake up a corresponding target agent object among the plurality of agent objects according to the user voice information.

According to one or more embodiments of the present disclosure, an apparatus of waking up an application is provided, which is applied to a terminal device. The application includes a plurality of agent objects. The apparatus includes:
an obtaining unit, configured to obtain user voice information;
a determining unit, configured to determine target wake-up information according to the user voice information; and
a wake-up unit, configured to wake up a corresponding target agent object among the plurality of agent objects according to the target wake-up information.

According to one or more embodiments of the present disclosure, an electronic device is provided, including at least one processor and a memory;
the memory stores computer-executable instructions; and
the at least one processor executes the computer-executable instructions stored in the memory, cause the at least one processor to execute the method of waking up an application of various possible designs in the above embodiments.

According to one or more embodiments of the present disclosure, a computer-readable storage medium is provided, where the computer-readable storage medium stores computer-executable instructions, and when a processor executes the computer-executable instructions, the method of waking up an application of various possible designs in the above embodiments is implemented.

According to one or more embodiments of the present disclosure, a computer program product is provided, including a computer program, and when the computer program is executed by a processor, the method of waking up an application of various possible designs in the above embodiments is implemented.

The above description is only preferred embodiments of the present disclosure and an explanation of the technical principles employed. Those skilled in the art should understand that the scope of disclosure involved in the present disclosure is not limited to the technical solutions formed by the specific combination of the above technical features, and should also cover, without departing from the above disclosed concept, other technical solutions formed by any combination of the above technical features or their equivalent features. For example, a technical solution formed by replacing the above features with technical features with similar functions disclosed in the present disclosure (but not limited thereto) also falls within the protection scope of the present disclosure.

Additionally, although operations are depicted in a particular order, it should not be understood that these operations are required to be performed in a specific order as illustrated or in a sequential order. Under certain circumstances, multitasking and parallel processing may be advantageous. Likewise, although several specific implementation details are included in the above discussion, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or logical actions of the method, it should be understood that the subject matter defined in the appended claims is not necessarily limited to the specific features or actions described above. Rather, the specific features and actions described above are merely example forms for implementing the claims.

## Claims

1. A method of waking up an application, wherein the application comprises a plurality of agent objects, each agent object has corresponding wake-up information, and the method comprises:
obtaining first wake-up information (S201);
determining, among the plurality of agent objects, a first agent object corresponding to the first wake-up information (S202); and
waking up the first agent object (S203).

2. The method according to claim **1,** wherein the first wake-up information comprises a first wake-up word, and the obtaining first wake-up information comprises:
obtaining user voice information; and
determining the first wake-up word in the user voice information.

3. The method according to claim 1, wherein the first wake-up information comprises a first wake-up gesture, and the obtaining first wake-up information comprises:
obtaining a first image, wherein the first image is acquired for a user gesture; and
recognizing gesture information in the first image as the first wake-up gesture.

4. The method according to any one of claims 1-3, wherein after waking up the first agent object, the method further comprises:
determining first opening information according to the first agent object; and
controlling the first agent object to broadcast the first opening information.

5. The method according to claim 4, further comprising:
obtaining a first preset duration corresponding to the first agent object; and
in response to not receiving user voice information within the first preset duration after the first agent object broadcasts the first opening information, determining second opening information according to the first agent object, and broadcasting the second opening information.

6. The method according to claim 5, further comprising:
obtaining a last wake-up time of the first agent object; and
determining a time interval from the last wake-up time to a current wake-up time,
wherein the determining first opening information according to the first agent object comprises: controlling the first agent object to generate the first opening information according to the time interval, and/or the determining second opening information according to the first agent object comprises: controlling the first agent object to generate the second opening information according to the time interval.

7. The method according to claim 5, further comprising:
obtaining historical interaction information between the first agent object and a user,
wherein the determining first opening information according to the first agent object comprises: controlling the first agent object to generate the first opening information according to the historical interaction information, and/or the determining second opening information according to the first agent object comprises: controlling the first agent object to generate the second opening information according to the historical interaction information.

8. The method according to claim 5, wherein at least one of the first opening information and the second opening information are preset for the first agent object.

9. The method according to claim 8, further comprising:
obtaining a second preset duration corresponding to the first agent object; and
in response to not receiving the user voice information within the second preset duration after the first agent object broadcasts the first opening information or within the second preset duration after the first agent object broadcasts the second opening information, exiting the first agent object, wherein the first agent object that is exited is used for interaction after being re-woken up.

10. The method according to claim 2, wherein after waking up the first agent object, the method further comprises:
controlling the first agent object to generate reply information for the user voice information.

11. The method according to any one claims 1-3, wherein the waking up the first agent object comprises:
determining whether the first agent object is set to be unable to be woken up; and
waking up the first agent object in response to the first agent object being not set to be unable to be woken up.

12. The method according to any one of claims 1-3, wherein different agent objects correspond to different attributes, and the attributes of the agent objects are predefined.

13. The method according to any one of claims 1-3, wherein the application is deployed in a wearable device (11) or a terminal device (12).

14. An electronic device, comprising at least one processor and at least one memory;
wherein the at least one memory stores computer-executable instructions; and
the at least one processor executes the computer-executable instructions stored in the at least one memory, causing the at least one processor to execute the method of waking up an application according to any one of claims 1-13.

15. A non-transitory computer-readable storage medium, wherein the non-transitory computer-readable storage medium stores computer-executable instructions, and when a processor executes the computer-executable instructions, the method of waking up an application according to any one of claims 1-13 is implemented.
